# EUROPEAN PATENT SPECIFICATION

(11) **EP 2 232 845 B1**
(45) Date of publication and mention of the grant of the patent: **15.05.2013**
(21) Application number: 07858334.1
(22) Date of filing: 13.12.2007
(51) Int. Cl.: H04N 5/275, H04N 5/272, H04N 5/222

(54) **A METHOD FOR MODIFYING THE CONTENT OF A TELEVISION IMAGE**
VERFAHREN ZUM MODIFZIEREN DES INHALTS EINES FERNSEHBILDES
PROCÉDÉ DE MODIFICATION DU CONTENU D'UNE IMAGE TÉLÉVISÉE

(43) Date of publication of application: 29.09.2010
(73) Proprietor: Supponor Oy, 52300 Ristiina (FI)
(72) Inventor: RANTALAINEN, Erkki, FI-52300 Ristiina (FI)
(74) Representative: Robinson, Ian Michael
(86) International application number: PCT/FI2007/050683
(87) International publication number: WO 2009/074710

(56) References cited:
- WO-A1-01/35675
- WO-A1-97/00582
- WO-A1-03/021957
- US-A- 5 353 392
- US-A1- 2001 017 671
- US-A1- 2001 017 671
- US-A1- 2003 028 873
- "Chapter 13 / Section 13.2" In: Laurie Ulrich Fuller; Robert C. Fuller: "Photoshop® CS3 Bible", 10 July 2007 (2007-07-10), John Wiley & Sons, XP007919914, ISBN: 978-0-470-11541-1 * the whole document *

## Description

### FIELD OF THE INVENTION

The present invention relates to modifying the content of a television image by inserting additional graphics and substitutive content into specific areas of the television image.

### BACKGROUND OF THE INVENTION

There are many situations where the content of a television image initially originating from a view shot by a television camera is desired to be modified by substituting some portion of the image by a new content. One typical example relates to advertisements at a venue of a sports event. The television signal from the sports event can be transmitted all over the world. It is then often desired to adjust the advertisements visible in the final television image separately to different spectator groups or geographical areas.

Inserting substitutive content into a television image requires naturally information about the location of the area to be modified in the image. This information can be generated, for example, by using a marking surface within the vicinity of the target to be substituted in the television image, the marking surface being identifiable on the basis of radiation from it differing from the other radiation from the area shot by the camera. By detecting this differing radiation by specific detectors, the coordinates of the target to be modified in the television image can be determined. This kind of marking of the target to be modified is described in more detail in the applicant's earlier patent application WO 01/58147. When the coordinates of the target to be modified are known it is possible, for example, to modify the target to be modified separately for different spectator groups formed by using certain grouping criteria, e.g. nationality. In addition to the coordinates of the target to be modified, it is also important to know whether there are some obstructions hiding part of the target so that modification can be performed for those areas of the target to be modified visible in the image only. For this purpose, WO 01/58147 discloses generating a mask image determining the areas of the target area really visible in the image.

Once the required information concerning the location of the target to be modified in the television image is generated, this information can be transmitted together with the actual television signal for enabling modification of the target to be modified in the television image at a later stage of the signal transmission chain. In this approach less signal transmission capacity is required in comparison to the case of modifying the signal already at the beginning of the signal transmission chain and transmitting all modified signals together. The principle of this approach is disclosed in the applicants' earlier patent application WO 03/021957.

Graphics is often added to the television image before transmitting the processed television signal further. Graphics added already at the very early stage of the signal transmission chain is usually not intended to be modified in the later stages of the signal transmission. As a solution to this, patent application US 2001/0017671 A1 discloses a method wherein substitutive content is inserted only in those portions of the target area to be modified not including any earlier added graphics. This limitation to graphics-free areas necessitates transmitting information about the graphics location. This is described to be performed e.g. by transmitting, together with the image signal with the added graphics, also the original non-processed image signal and comparing then these signals in order to determine the graphics location. This naturally requires a lot of data transmission capacity which makes the process unpractical. As an alternative way it is described that just data identifying the graphics location can be transmitted.

In addition to the high data transmission capacity required by some prior art methods, one common problem in prior art solutions disclosed e.g. in said US 2001/0017671 A1 is that they are restricted to cases where the additional graphics fully replaces, in its area, the original content of the television image. However, in many cases it would be desired to have the added graphics and sometimes also the substitutive content partially transparent maintaining also the earlier content at the same location visible.

WO 01/35675 A1 discloses a method for generating a three-dimensional television presentation comprising three layers: a three-dimensional back-ground layer, a two-dimensional video insert layer, and a three-dimensional foreground layer. The principle is to generate a three-dimensional scene, comprising the background and the foreground, and combine the video insert with the three-dimensional scene so as to appear between the foreground and the background.

### PURPOSE OF THE INVENTION

The purpose of the present invention is to provide a method enabling insertion of substitutive content to a certain portion of a television image at a later stage of the image signal transmission chain while saving unchanged in the final television image the desired appearance of graphics added at an early stage of the signal transmission chain, the method preferably requiring as low data transmission capacity as possible.

### SUMMARY OF THE INVENTION

The present invention is characterized by what is presented in claim 1.

The method of the present invention for modifying the content of a target area in a television image comprises generating an original image signal by means of a camera, processing the original image signal by adding graphics into the image, determining the target area in the image, transmitting further the processed image signal and the target area determining data, and inserting, at a later stage of the signal transmission chain, substitutive content to the target area according to the target area determining data.

The target area to be modified can be, for example, an advertising billboard visible in the image captured by the camera. Said modification can comprise e.g. adjusting the content in the area of the billboard in the image finally visible for the spectators separately for different spectator groups. The graphics can comprise any additive graphical content, e.g. different kinds of figures, letters or the like. In determining the target area, that is, its shape and location in the television image, e.g. marking surfaces described in WO 01/58147 can be used. By the method of WO 01/58147, also the possible mask area, i.e. an area within the target area which is not visible in the television image and to where thus no substitutive content should be inserted, can be determined. In the case of several target areas in the image, also information needed for identifying each of them is required to be determined and transmitted. The actual insertion of said substitutive content into the image at a later stage of the signal transmission chain is then performed according to the target area determining data transmitted together with the processed image signal. A later stage of the signal transmission chain means any stage after the initial transmission of the processed image signal and the target area determining data. For example, in the case of global television signal distribution, the substitutive content insertion can be carried out separately in each receiving country. Generating and transmitting further the processed image signal and the target area determining data can, in their turn, be performed e.g. already at the scene where the original image signal is generated.

According to the present invention, the graphics is added into the television image according to a predetermined graphics percentage of coverage; the method further comprises determining the shared area of the target area and the additional graphics area in the television image, and transmitting further, together with the processed image signal and the target area determining data, the shared area determining data and data proportional to said graphics percentage of coverage; and, to the shared area, i.e to the intersection of the target area and the additional graphics, the substitutive content is inserted according to the residual percentage of coverage not covered by the added graphics.

The percentage of coverage means here the proportion of the additive content at each point of the image. In other words, the percentage of coverage determines which proportion of the image at each pixel or at a group of adjacent pixels consists of the added graphics, the rest consisting of the earlier content at the pixel at issue. The shared area of the target area and the additional graphics in the television image is the area within the target area including added graphics. Transmitting the shared area determining data and the data proportional to the graphics percentage of coverage can be performed, for example, by transmitting the original graphics and a control signal having been used in adjusting the graphics percentage of coverage. The data proportional to the graphics percentage of coverage can be presented e.g. as the residual percentage not covered by the graphics. Inserting the substitutive content to the shared area according to the residual percentage of coverage not covered by the added graphics means that the graphics percentage of coverage is maintained. For ex-example, if the predetermined graphics percentage of coverage is 80% there is a percentage of coverage of 20% to be covered by the original and the substitutive contents in the shared area. It is possible that also the desired percentage of coverage of the substitutive content is below 100 %. It means that the residual percentage of coverage in the shared area not covered by the added graphics is made to consist of both the original image content and the substitutive content. This requires transmitting the original graphics together with the processed image signal. The desired percentage of coverage of the substitutive content can be determined already at the transmitting stage and sent further together with the other data.

The key feature of the present invention is the possibility to add partially transparent graphics also to the target area to be modified, though maintaining the predetermined graphics percentage of coverage also after insertion of the substitutive content to the target area. This is a great improvement to the prior art techniques restricted to insertions with a full coverage, i.e. without any transparency.

In order to decrease the required data transmission capacity, in the present invention, the graphics is added to the shared area with a full coverage independently from the predetermined graphics percentage of coverage. By proceeding this way, transmitting the original graphics is not required. This is a clear advantage from the data transmission capacity point of view. Replacing the content of the target area of an image processed this way by a substitutive content according to said residual percentage of coverage always produces a result image where the shared area comprises the graphics with the predetermined percentage of coverage, the rest of the coverage being composed of the substitutive content.

In a preferred embodiment of the present invention, the target area determining data, the shared area determining data and the data proportional to the graphics percentage of coverage are transmitted in an auxiliary image signal, the image content of which being arranged according to said data. In other words, the image content is arranged according to the geometries and locations of the target area and the shared area and contains also information about the graphics percentage of coverage. An auxiliary image signal is a form of data which is straightforward and easy to process in the signal processing systems of the television signal transmission chain. Also information concerning the possible mask area as well as information according to the intended substitutive content percentage of coverage is preferably carried along the auxiliary image signal. Thus, the auxiliary image signal can contain, for example, a one-color image, the intensity of which in the different areas, i.e. in the target area, the shared area, and in the possible mask area, being adjusted according to the intended percentages of coverage. It is also preferable that the coordinates of the corners or some other reference points of the target area in the television image are transmitted together with the auxiliary image signal. This kind of auxiliary image signal carrying all information needed in the later insertion of the substitutive content makes the insertion itself a very simple procedure requiring no highly sophisticated data handling systems. Naturally, it is also possible that the substitutive content percentage of coverage is determined not until at a later stage of the signal transmission chain.

The image area of the auxiliary image signal is preferably limited to the target area only in order to further decrease the required data transmitting capacity. In this embodiment, the information about the location of this kind of limited-size target area in the television is transmitted along the auxiliary image signal as image coordinates of selected points of the target area.

### BRIEF DESCRIPTION OF THE DRAWINGS

The present invention will be described in more detail in the following by means of the accompanying figures illustrating one preferred embodiment of the present invention.
Figure 1 illustrates the principle of generating the original television image and determining the location of the target area in the image to be modified.
Figure 2 represents, as a block diagram, the steps of the embodiment at the transmitting end and the receiving end of the signal transmission chain, respectively.

### DETAILED DESCRIPTION OF THE INVENTION

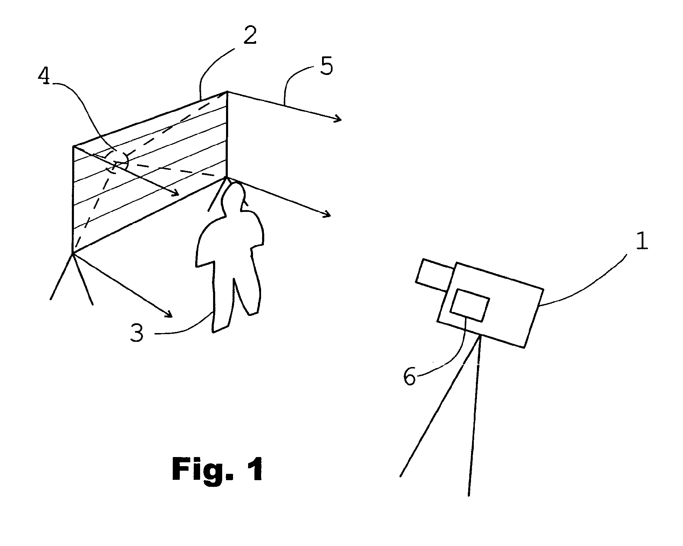

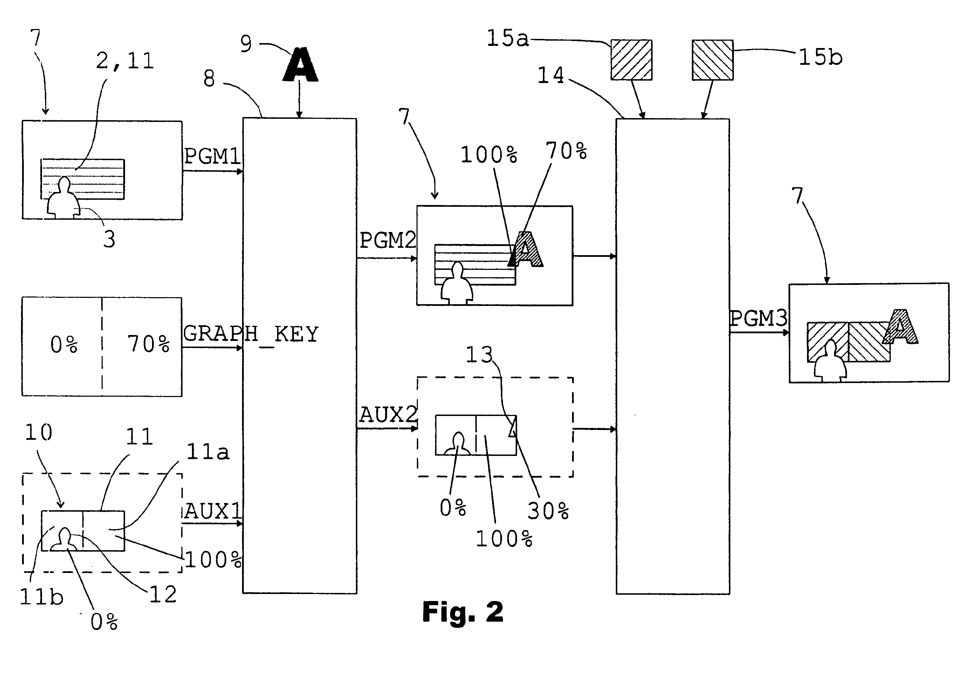

Figure 1 illustrates the starting point of the exemplary embodiment of the present invention. A television camera 1 shoots a view including an advertising billboard 2, the content of which in the final television image is desired to be modified. Between the camera and the billboard there is a person 3 making a part of the billboard invisible to the camera. For marking the area of the billboard in the image captured by the camera and thus for giving information needed for determining the area of it in the television image, i.e. the target area to be modified, there is a radiation source 4 behind the billboard emitting infrared radiation 5 to the whole area of the billboard. (As is described in WO 01/58147, naturally, the radiation could be any type of radiation sufficiently differing from the other radiation at the venue.) The billboard is arranged to re-direct this radiation to the front side of the billboard. Thus, to the side of the camera, the billboard area appears as a planar infrared source. The infrared radiation from the billboard area is detected by a special detector 6 attached to the camera. From the data captured by the detector, when the relationship between the coordinates of the detector and camera images is known, it is possible to determine the target area in the television image. Further, it is possible to determine the mask formed by the person hiding part of the billboard. In the embodiment at issue, these are combined to form a mask image 10, shown in Figure 2, determining the shape and size of the target area 11 and the mask area 12 within it. In addition to the geometry information, the contents of the mask image also comprises information about the intended percentage of coverage of the substitutive content, which in this case is 100 % except the mask area, for which it naturally is 0 %. In more detail, the mask image is, in this embodiment, a single-color image, the intensities of its different areas being selected to be proportional to those percentages of coverage.

As shown in Fig. 2, the original television image 7 captured by the camera and supplied in an original television signal PGM1 to the transmitting stage 8 of the signal transmitting chain includes the billboard 2, part of it being hidden behind the person 3 having been stood between the billboard and the camera at the original venue. To the transmitting stage is supplied also a graphics control signal GRAPH_KEY. In the example of Fig. 2, this graphics control signal determines the graphics 9, also supplied to the transmitting stage, to be added to the right side of the image area with a percentage of coverage of 70%. The third signal supplied to the transmitting stage is a first auxiliary image signal AUX1 containing the mask image 10 described above. The image area of the mask image is limited to the target area only in order to save the data transmission capacity. Then, naturally, also the coordinates of the target area corners or some other reference points in the image area of the television image must be carried along the first auxiliary image signal AUX1. In this example, the target area is divided into two sub-areas 11a, 11b for enabling e.g. insertion of two different advertisements as the substitutive content to the target area. The identification information of the sub-areas are also carried along the first auxiliary image signal AUX1.

At the transmitting stage 8 of the signal transmission chain, the mask image 10, the graphics 9 and the graphic control signal GRAPH_KEY are combined to determine the shared area 13 where the added graphics area overlaps with the target area 11. In the embodiment of Figure 2, when adding the graphics to the image according to the actual graphics control signal, in this shared area the graphics is set to have a percentage of coverage of 100%, independently from the percentage determined by the graphics control signal GRAF_KEY. The intended percentage of coverage for the substitutive content for this shared area is set according to the residual percentage not covered by the graphics percentage of coverage. In this case this results in 100% x (100% - 70%) = 30%.

As an output of the transmitting stage 8, two signals are transmitted further: a processed television signal PGM2 including the graphics 9 in the image 7 added as described above; and a second auxiliary image signal AUX2, the image of which differing from that of the first auxiliary image signal in that the intensity in the shared area 13 is adjusted according to the residual percentage of coverage determined above. These two signals are then received at a receiving stage 14 of the signal transmission chain for final processing of the television image before showing it to the spectators. In said processing, the desired substitutive content 15a, 15b is inserted into the image 7 of television signal PGM2 according to the information carried along the second auxiliary image signal AUX2. This means that the substitutive content is inserted into the target area 11 determined by the mask image 10 and said target area coordinates. In this case this means inserting two separate sub-contents 15a, 15b to the two sub-areas 11a 11b of the target area, the sub-areas being identified by the identification information also transmitted together with the second auxiliary image signal. The insertion is carried out with percentages of coverage determined by the intensities of the different areas of the image of the second auxiliary image signal. To the target area portion outside the mask area 12 and the shared area 13, the substitutive content is added with a full percentage of coverage. Naturally, no substitutive content is inserted to the mask area 12. Finally, the earlier mentioned shared area percentage of coverage of 30% is used for the shared area 13 fully covered by the added graphics in the processed television signal PGM2. As a result, the shared area 13 of the television image 7 of the third television signal PGM3 produced by the receiving stage 14 consists of the added graphics with a percentage of coverage of 70 % and the substitutive content with a percentage of coverage of 30 %. This means that the content of the final television image in the output signal PGM3 is exactly what it would be if the substitutive content would have been at the site of the advertising billboard at the original venue.

The borders between the different television image areas described above are preferably softened by utilization of a transition zone within which the image content changes from that of one area to that of the other. In other words, e.g. at the border between the target area and the image area outside of it, the original image content is set to be replaced by the substitutive one within a finite-width transition zone. Abrupt change without any softening could cause an unrealistic impression. The width of the transition zone is preferably adjusted according to the movement of the objects in the television image so that with rapidly moving objects it is wider than with stationary ones.

It is important to be kept in mind that the process illustrated in Fig. 2 and described above is one exemplary embodiment of the present invention only. The actual signal types and the ways of presenting the information contents needed in the method can vary freely within the scope of the claims. The principle of the present invention is applicable as well in analogue as in digital systems. It is also possible to carry the additional information for later insertion of substitutive content in the same signal with the television image. As is known for a person skilled in the art, some television signal standards determine initially empty data blocks suitable for this purpose. Moreover, the present invention is not limited to any specific equipment. All of the above-described steps of processing the signals can be automatically computer-controlled by standard or application-specific equipment or as well by adjusting the signals at least partially manually.

One possible change to the process of figure 2 would be sending together with the processed image signal PGM2, instead of the second auxiliary signal AUX2, the original graphics and the graphics control signal GRAPH_KEY and determining the shared area based on them not until at a later stage of the signal transmission chain. That way of proceeding would allow setting both the substitutive content and the added graphics percentages of coverage simultaneously below 100%. In addition, in this approach the percentages of coverage could be determined only just at the receiving stage. A drawback would be a possibly higher data transmission capacity required for the graphics information.

## Claims

1. A method for modifying the content of a target area (11) in a television image (7), the method comprising generating an original image signal (PGM1)/ contaiming the televesion image (7) by means of a camera (1) , processing the original image signal by adding graphics (9) into the television image,thereby obtaining a processed image signal (PGM2) determining the target area in the television image, transmitting further the processed image signal, (PGM2) and data determing the shared area called target area determining data as to enable inserting, at a later stage (14) of a signal transmission chain, substitutive content (15a, 15b) to the target area according to the target area determining data, whereby
- the graphics (9) is added into the television image (7) according to a predetermined graphics whereby the area of the television image into which the graphics of coverage determines which proportion of the television image at each pixel or at a group of adjacent pixels consists of the graphics the rest consisting of carlier content of the or pixels at issue percentage of coverage; and
- the method further comprises
- determining a shared area (13) of the target area (11) and the graphics (9) area in the television image,
- transmitting further data determining the shared area, called shared area determining data, and data proportional to the graphics percentage of coverage so as to enable inserting substitutive content (15a, 15b) to the shared area (13) according to a residual percentage of coverage not covered by the graphics (9)
and
- inserting, at a later stage (14) of the signal transmission chain, substitutive content (15a, 15b) to the target area according to the target area determining data, wherein to the shared area (13), the substitutive content (15a, 15b) is inserted according to the residual percentage of coverage not covered by the added graphics;
- to the shared area (13), the graphics (9) is added with a full coverage independently from the predetermined graphics percentage of coverage.

2. A method for modifying the content of a target area (11) in a television image (7), the method comprising
- receiving the processed image signal (PGM2), the target area determining data, the shared area determining data, and the data proportional to the graphics percentage of coverage as defined in claim 1, and
- inserting substitutive content (15a, 15b) to the target area according to the target area determining data,
whereby to the shared area (13), the substitutive content (15a, 15b) is inserted according to the residual percentage of coverage not covered by the added graphics.

3. A method according to claim 1, **characterized in that** the target area determining data, the shared area determining data and the data proportional to the graphics percentage of coverage are transmitted in an auxiliary image signal (AUX2), the image content of which being arranged according to said data.

4. A method according to claim 3, **characterized in that**, in order to decrease the required data transmitting capacity, the image area of the auxiliary image signal (AUX2) is limited to the target area (11), and that the information about the location of the target area in the television image (7) is transmitted as image coordinates of selected points of the target area.

## Patentansprüche

1. Verfahren zum Modifizieren des Inhalts eines Zielbereichs (11) in einem Fernsehbild (7), wobei das Verfahren umfasst: Erzeugen eines Originalbildsignals (PGM1), das das Fernsehbild (7) enthält, mittels einer Kamera (1), Verarbeiten des Originalbildsignals (PGM1) durch Hinzufügen von Grafik (9) zum Fernsehbild, um dadurch ein verarbeitetes Bildsignal (PGM2) zu erhalten, Bestimmen des Zielbereichs im Fernsehbild, Übertragen ferner des verarbeiteten Bildsignals (PGM2) und von Daten, die den Zielbereich bestimmen und Zielbereichsbestimmungsdaten genannt werden, um das Einfügen von Ersatzinhalt (15a, 15b) in den Zielbereich gemäß den Zielbereichsbestimmungsdaten in einer späteren Phase (14) einer Signalübertragungskette zu ermöglichen,
- wobei die Grafik (9) gemäß einem vorbestimmten Grafikdeckungsprozentsatz zum Fernsehbild (7) hinzugefügt wird, wobei der Bereich des Fernsehbildes, zu dem die Grafik hinzugefügt wird, Grafikbereich genannt wird und wobei ein Grafikdeckungsprozentsatz bestimmt, welcher Anteil des Fernsehbildes an jedem Pixel oder an einer Gruppe von benachbarten Pixeln aus der Grafik besteht, wobei der Rest aus früherem Inhalt des oder der betreffenden Pixel besteht; und
- das Verfahren ferner umfasst:
- Bestimmen eines gemeinsamen Bereichs (13) des Zielbereichs (11) und des Bereichs der Grafik (9) im Fernsehbild,
- Übertragen ferner von Daten, die den gemeinsamen Bereich bestimmen und Gemeinsamer-Bereich-Bestimmungsdaten genannt werden, und Daten proportional zum Grafikdeckungsprozentsatz, um das Einfügen von Ersatzinhalt (15a, 15b) in den gemeinsamen Bereich (13) gemäß einem durch die Grafik (9) nicht gedeckten Restdeckungsprozentsatz zu ermöglichen, und
- Einfügen von Ersatzinhalt (15a, 15b) in den Zielbereich gemäß den Zielbereichsbestimmungsdaten in einer späteren Phase (14) der Signalübertragungskette, wobei der Ersatzinhalt (15a, 15b) gemäß dem durch die hinzugefügte Grafik (9) nicht gedeckten Restdeckungsprozentsatz in den gemeinsamen Bereich (13) eingefügt wird; und
- wobei die Grafik (9) unabhängig vom vorbestimmten Grafikdeckungsprozentsatz mit einer vollständigen Deckung zum gemeinsamen Bereich (13) hinzugefügt wird.

2. Verfahren zum Modifizieren des Inhalts eines Zielbereichs (11) in einem Fernsehbild (7), wobei das Verfahren umfasst:
- Empfangen des verarbeiteten Bildsignals (PGM2), der Zielbereichsbestimmungsdaten, der Gemeinsamer-Bereich-Bestimmungsdaten und der Daten proportional zum Grafikdeckungsprozentsatz, wie in Anspruch 1 definiert, und
- Einfügen von Ersatzinhalt (15a, 15b) in den Zielbereich gemäß den Zielbereichsbestimmungsdaten,
wobei der Ersatzinhalt (15a, 15b) gemäß dem durch die hinzugefügte Grafik nicht gedeckten Restdeckungsprozentsatz in den gemeinsamen Bereich (13) eingefügt wird.

3. Verfahren nach Anspruch 1, **dadurch gekennzeichnet, dass** die Zielbereichsbestimmungsdaten, die Gemeinsamer-Bereich-Bestimmungsdaten und die Daten proportional zum Grafikdeckungsprozentsatz in einem Hilfs-Bildsignal (AUX2) übertragen werden, dessen Bildinhalt gemäß den Daten ausgelegt ist.

4. Verfahren nach Anspruch 3, **dadurch gekennzeichnet, dass** zum Verringern der erforderlichen Datenübertragungskapazität der Bildbereich des Hilfs-Bildsignals (AUX2) auf den Zielbereich (11) beschränkt wird, und dass die Informationen über den Ort des Zielbereichs im Fernsehbild (7) als Bildkoordinaten von ausgewählten Punkten des Zielbereichs übertragen werden.

## Revendications

1. Procédé de modification du contenu d'une zone cible (11) dans une image télévisée (7), le procédé comprenant la génération d'un signal d'image initial (PGM1), contenant l'image télévisée (7), au moyen d'une caméra (1), le traitement du signal d'image initial en ajoutant des graphiques (9) dans l'image télévisée, obtenant ainsi un signal d'image traité (PGM2), la détermination de la zone cible dans l'image télévisée, la transmission en outre du signal d'image traité (PGM2) et de données déterminant la zone cible, appelées données de détermination de zone cible, de manière à permettre l'insertion, à un stade ultérieur (14) d'une chaîne de transmission de signal, d'un contenu de remplacement (15a, 15b) dans la zone cible en fonction des données de détermination de zone cible, par lequel :
- les graphiques (9) sont ajoutés dans l'image télévisée (7) en fonction d'un pourcentage de couverture de graphiques prédéterminé, par lequel la zone de l'image télévisée dans laquelle les graphiques sont ajoutés est appelée zone de graphiques, et par lequel un pourcentage de couverture de graphiques détermine la proportion de l'image télévisée au niveau de chaque pixel ou d'un groupe de pixels adjacents constituée par les graphiques, le reste consistant en un contenu antérieur du pixel ou des pixels concernés ;
- le procédé comprend en outre
- la détermination d'une zone partagée (13) de la zone cible (11) et de la zone de graphiques (9) dans l'image télévisée,
- la transmission en outre de données déterminant la zone partagée, appelées données de détermination de zone partagée, et de données proportionnelles au pourcentage de couverture de graphiques de façon à permettre l'insertion d'un contenu de remplacement (15a, 15b) dans la zone partagée (13) en fonction du pourcentage de couverture résiduel non couvert par les graphiques (9), et
- l'insertion, à un stade ultérieur (14) de la chaîne de transmission de signal, d'un contenu de remplacement (15a, 15b) dans la zone cible en fonction des données de détermination de zone cible, dans lequel dans la zone partagée (13), le contenu de remplacement (15a, 15b) est inséré en fonction du pourcentage de couverture résiduel non couvert par les graphiques ajoutés ;
- dans la zone partagée (13), les graphiques (9) sont ajoutés avec une couverture maximum indépendamment du pourcentage de couverture de graphiques prédéterminé.

2. Procédé de modification du contenu d'une zone cible (11) dans une image télévisée (7), le procédé comprenant
- la réception du signal d'image traité (PMG2), des données de détermination de zone partagée, et des données proportionnelles au pourcentage de couverture de graphiques tel que défini à la revendication 1, et
- l'insertion d'un contenu de remplacement (15a, 15b) dans la zone cible en fonction des données de détermination de zone cible,
par lequel dans la zone partagée (13), le contenu de remplacement (15a, 15b) est inséré en fonction du pourcentage de couverture résiduel non couverts par les graphiques ajoutés.

3. Procédé selon la revendication 1, **caractérisé en ce que** les données de détermination de zone cible, les données de détermination de zone partagée, et les données proportionnelles au pourcentage de couverture de graphiques sont transmises dans un signal d'image auxiliaire (AUX2), dont le contenu d'image est agencé en fonction desdites données.

4. Procédé selon la revendication 3, **caractérisé en ce que**, afin de diminuer la capacité de transmission de données requise, la zone d'image du signal d'image auxiliaire (AUX2) est limitée à la zone cible (11), et **en ce que** les informations relatives à la position de la zone cible dans l'image télévisée (7) sont transmises sous forme de coordonnées d'image de points sélectionnés de la zone cible.
